# EUROPÄISCHE PATENTSCHRIFT

(11) **EP 1 302 352 B1**
(45) Veröffentlichungstag und Bekanntmachung des Hinweises auf die Patenterteilung: **27.07.2005**
(21) Anmeldenummer: 02022421.8
(22) Anmeldetag: 04.10.2002
(51) Int. Cl.: B60J 10/12, B60J 7/043, B29C 70/84

(54) **Deckel für ein Fahrzeugdach und Verfahren zu dessen Herstellung**
Panel for a vehicle roof and method of producing it
Panneau pour un toit de véhicule et méthode pour sa production

(30) Priorität: 11.10.2001 DE 10150011
(43) Veröffentlichungstag der Anmeldung: 16.04.2003
(73) Patentinhaber: Webasto Vehicle Systems International GmbH, 82131 Stockdorf (DE)
(72) Erfinder: Dünzinger, Christian, 84066 Pfaffenberg (DE); Schröferl, Thomas, 82069 Hohenschäftlarn (DE)
(74) Vertreter: Konnerth, Dieter Hans

(56) Entgegenhaltungen:
- EP-A- 0 925 977
- EP-A- 1 080 962
- DE-A- 3 742 719
- DE-A- 19 808 113
- DE-C- 19 923 725
- US-A- 4 738 482

## Beschreibung

Die vorliegende Erfindung betrifft einen Deckel für ein Fahrzeugdach mit einem Deckelkörper, der im Bereich seines Außenrandes unter Bildung eines Kunststoffrahmens mit Metalleinleger umspritzt, insbesondere umschäumt, ist, wobei der Metalleinleger sich rahmenförmig entlang im wesentlichen dem gesamten Umfang des Deckels erstreckt, aber in Deckelumfangsrichtung mehrteilig ausgebildet ist, und von dem Kunststoffrahmen nur teilweise umgriffen ist, sowie ein Verfahren zum Herstellen eines solchen Deckels.

Ein gattungsgemäßer Deckel ist aus der DE 37 42 719 A1 bekannt. Eine Deckelumschäumung mit Elastomermasse enthält einen ein- oder mehrteiligen Deckelträger, der beispielsweise aus Blech gestanzt und geformt ist und einen Verstärkungsrahmen bildet. Eine im Deckelträger gebildete Sicke oder Auswölbung begrenzt des Vordringen der Elastomermasse zwischen dem Deckelträger und dem Deckel nach innen.

Ein weiterer Deckel ist aus der DE 198 08 113 A1 bekannt. Es handelt sich dabei um ein Glasverbundelement, insbesondere in Form eines Glasschiebedaches für Kraftfahrzeuge, das eine Glasscheibe aufweist, die am Außenrand mit einem Kunststoffrahmen umschäumt ist, wobei vorzugsweise durch Winkelbleche gebildete Halterungsteile an zwei einander gegenüberliegenden Seiten des Glasverbundelements mitumschäumt und von dem Kunststoffrahmen im zur Glasscheibe parallelen Bereich vollständig abgedeckt sind.

Es ist Aufgabe der vorliegenden Erfindung, einen Deckel für ein Fahrzeugdach zu schaffen, der im Vergleich zu dem bekannten Deckel eine erhöhte Verwindungssteifigkeit hat und zu dessen Herstellung eine relativ kleine Menge an Schäummasse ausreicht. Gegenüber gleichfalls bekannten Glasdeckeln mit einteiligem Verstärkungsrahmen sollen eine vereinfachte Fertigung und eine flexible Anpassung an unterschiedliche Deckelabmessungen und/oder Deckelwölbungen möglich sein.

Es ist eine weitere Aufgabe, ein verbessertes Verfahren zur Herstellung eines solchen Deckels anzugeben.

Die erstgenannte Aufgabe wird erfingdungsgemäß durch eine Deckel mit den Merkmalen des Anspruchs 1 sowie durch einen Deckel mit den Merkmalen des Anspruchs 2 gelöst.

Trotz der Mehrteiligkeit des Metalleinlegers wird eine hohe Verwindungssteifigkeit erhalten, weil verstärkende Einlegerteile nicht nur an den Deckelseitenrändern, sondern praktisch im gesamten Umfangsbereich des Deckels vorhanden sind. Im Vergleich zu einem einteiligen Verstärkungsrahmen werden andererseits große, empfindliche, hinsichtlich Fertigung, Verpackung, Transport und Lagerung aufwendige Blechteile vermieden. Damit sind erhebliche Kosteneinsparungen verbunden. Außerdem ist eine relativ einfache Anpassung an unterschiedliche Dekkelformen und Deckeldimensionen möglich. Beispielsweise können zur Fertigung von Deckeln gleicher Länge, aber unterschiedlicher Breite gleiche seitliche Verstärkungsteile oder zur Fertigung von Deckeln gleicher Breite, aber unterschiedlicher Länge gleiche vordere und hintere Verstärkungsteile eingesetzt werden. Ferner spart die nur teilweise Umschäumung des Metalleinlegers in der Regel teure Schäummasse ein, und sie ermöglicht niedrigere Deckelgewichte.

Vorteilhafte Ausgestaltungen der Erfindung ergeben sich aus den Unteransprüchen.

Vorzugsweise wird der Deckel derart gebildet, dass der Kunststoffrahmen einen auf den Deckelkörper bezogenen Außenrandbereich des Metalleinlegers überdeckt, wohingegen innenliegende Bereiche des Metalleinlegers freigelassen werden.

Vorzugsweise hat der Metalleinleger eine umlaufende Sicke, die mit ihrem Grund an der Unterseite des Deckelkörpers anliegt, und reicht der Kunststoffrahmen nach innen bis zu einer Außenwand dieser umlaufenden Sicke.

Die Lösung der zweitgenannten Aufgabe liegt in einem Herstellungsverfahren, bei dem zum Umschäumen der Deckelkörper zusammen mit dem mehrteiligen Metalleinleger in ein Schäumwerkzeug eingelegt und dann Schäummasse eingebracht wird, wobei zum Begrenzen des Vordringens der Schäummasse nach innen eine Dichtung in die umlaufende Sicke des Metalleinlegers eingelegt wird. Diese Dichtung kann vorteilhaft im Bereich der Trennstellen zwischen den Einlegerteilen mittels einer Hilfsdichtung verstärkt werden.

Der Metalleinleger ist vorzugsweise in Deckelumfangsrichtung viergeteilt, wobei jedes Einlegerteil sich im wesentlichen entlang einer der vier Deckelseiten erstreckt. An mindestens einem Teil der Einlegerteile, zweckmäßig an den einander gegenüberliegenden seitlichen Verstärkungsteilen, können sich nach unten durch den Kunststoffrahmen hindurcherstreckende Deckelhalterungen oder dergleichen vorgesehen sein, insbesondere Halterungen zur Anbindung des Deckels an einen Deckelverstellmechanismus, wie er für Schiebedächer, Schiebehebedächer und dergleichen bekannt ist.

Der Deckelkörper kann insbesondere aus Glas oder durchsichtigem Kunststoff gefertigt sein. Für den Kunststoffrahmen eignet sich unter anderem vor allem PUR-Schaum.

Gemäß einer bevorzugten weiteren Ausgestaltung der Erfindung bildet der Kunststoffrahmen zusätzlich seitliche Blenden zum Abdecken von seitlichen Spalten zwischen dem Deckel und der festen Dachhaut beim Ausstellen des Deckels.

Im folgenden ist ein Ausführungsbeispiel der Erfindung anhand der beigefügten Zeichnungen näher erläutert. Es zeigt:
- Fig. 1: eine perspektivische Teildraufsicht auf die Unterseite eines Deckelkörpers mit darauf aufgelegten Einlegerteilen;
- Fig. 2: eine perspektivische Teildraufsicht entsprechend Fig. 1 nach dem Umschäumen;
- Fig. 3: in vergrößerter Darstellung eine Teildraufsicht auf den in Fig. 1 oberen Eckbereich der Anordnung nach Fig. 1, wobei Dichtungen dargestellt sind, die beim Umschäumen eingelegt werden, um das Vordringen des Schaumwerkstoffes zu begrenzen;
- Fig. 4: in perspektivischer Schnittdarstellung eine zum Umschäumen an die Anordnung eingelegte Hauptdichtung; und
- Fig. 5: in einer Schnittdarstellung entlang der Hauptdichtung den Bereich zwischen zwei Einlegerteilen.

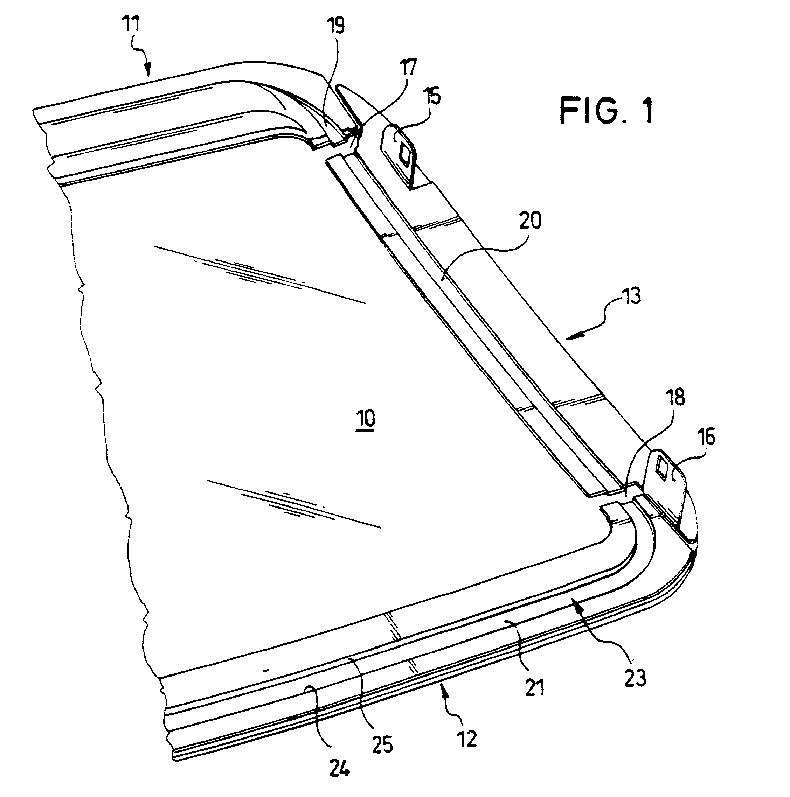

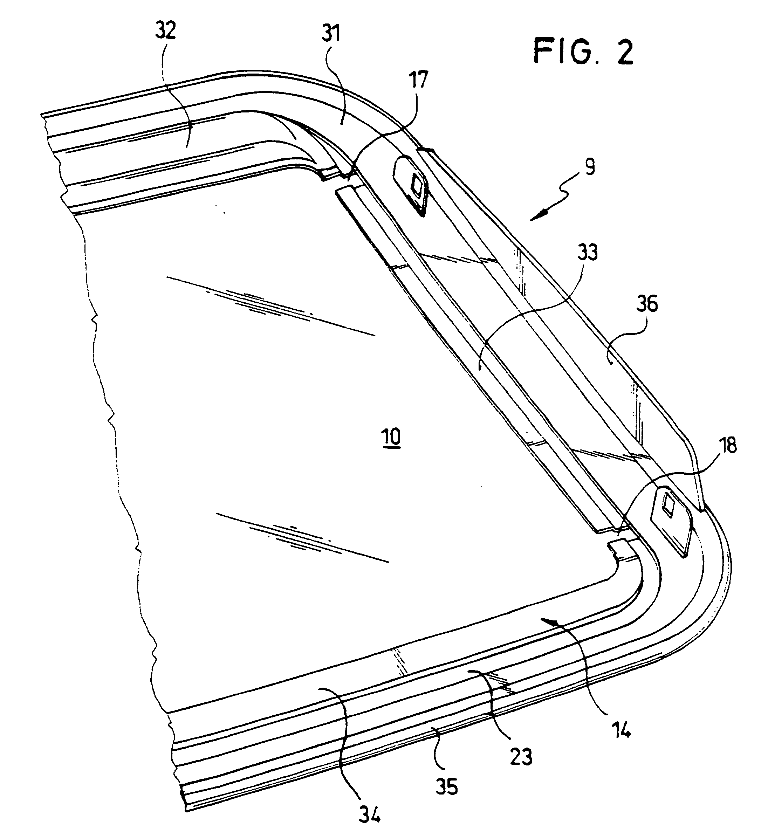

Gemäß Fig. 1 weist der in Fig. 2 insgesamt mit 9 bezeichnete Deckel einen im wesentlichen rechteckigen Deckelkörper 10 auf, der vorzugsweise von einer Glasscheibe gebildet wird oder aus durchsichtigem Kunststoff besteht. Auf diejenige Seite des Deckelkörpers 10, die bei in ein Fahrzeugdach eingebautem Dekkel die Unterseite darstellt, sind vier Einlegerteile aus Blech aufgelegt, von denen in Fig. 1 und in Fig. 2 nur drei dargestellt sind, und zwar ein vorderes Verstärkungsteil 11, ein hinteres Verstärkungsteil 12 und das eine Verstärkungsteil 13 der zwei seitlichen Verstärkungsteile. Jedes Einlegerteil erstreckt sich im wesentlichen entlang einer der vier Deckelseiten bzw. Deckelränder. Die vier Einlegerteile sind zweckentsprechend profiliert, um die erforderliche Deckelsteifigkeit sicherzustellen, und die Einlegerteile stellen zusammen einen viergeteilten Metalleinleger 14 oder Verstärkungsrahmen dar. Von dem seitlichen Verstärkungsteil 13 sind zwei Deckelhalterungen 15 und 16 in einer zur Ebene des Deckelkörpers 10 im wesentlichen senkrechten Richtung abgewinkelt. Entsprechendes gilt auch für das zweite, nicht dargestellte seitliche Verstärkungsteil, das zu dem Verstärkungsteil 13 spiegelsymmetrisch ausgebildet sein kann.

Die vier Einlegerteile sind durch vier, vorzugsweise abgewinkelte, Spalte voneinander getrennt, von denen in den Figuren 1 und 2 ein Spalt 17 zwischen den Einlegerteilen 11 und 13 sowie ein Spalt 18 zwischen den Einlegerteilen 12 und 13 zu erkennen sind. Diese Spalte 17 und 18 erlauben unterschiedliche Wärmeausdehnungen des Deckelkörpers 10 und der verstärkenden Einlegerteile. Jedes der Einlegerteile ist mit einer Sicke 19, 20 beziehungsweise 21 versehen, deren Grund 22 an der Unterseite des Deckelkörpers 10 anliegt oder mit dieser über eine Klebe/Dichtraupe oder dergleichen (nicht dargestellt) verbunden ist. Die Sicken 19, 20, 21 fluchten im Bereich der Spalte 17, 18 miteinander, und sie bilden zusammen mit einer der Sicke 20 des nicht dargestellten Einlegerteils entsprechenden Sicke eine Metalleinlegersicke 23, die im Deckelrandbereich umläuft, nur von den Spalten zwischen den einzelnen Einlegerteilen unterbrochen ist und eine Außenwand 24 und eine Innenwand 25 aufweist.

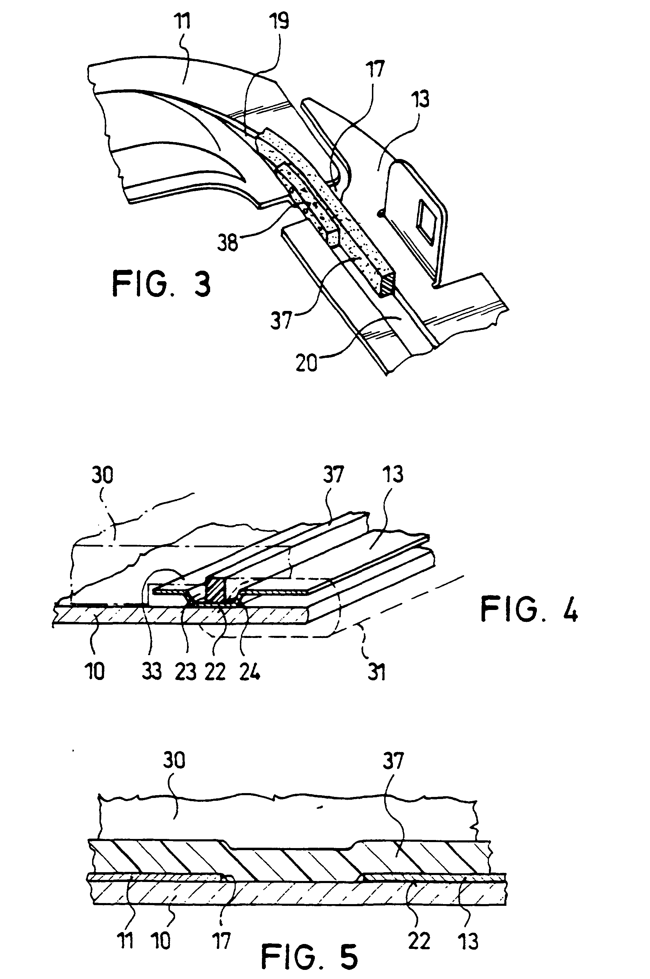

Die Anordnung gemäß Fig. 1 wird in ein in den Figuren 4 und 5 nur schematisch angedeutetes Schäumwerkzeug 30 eingelegt und im Bereich ihres Außenrandes mit Schäummasse, vorzugsweise PUR, unter Bildung eines ununterbrochenen, rundumlaufenden Kunststoffrahmens 31 umschäumt. Der Kunststoffrahmen 31 sorgt für eine Befestigung der Einlegerteile an dem Deckelkörper 10. Die Schäummasse bedeckt den Metalleinleger 14, der von den Einlegerteilen 11 bis 13 und dem nicht dargestellten vierten Einlegerteil gebildet ist, nicht vollständig, sondern sie erstreckt sich nur über dessen auf den Deckelkörper in bezogenen Außenrandbereich, und zwar im dargestellten bevorzugten Ausführungsbeispiel bis zu der Außenwand 24 der Metalleinlegersicke 23. Innenliegende Bereiche 32, 33, 34 der Einlegerteile sind von Schäummasse freigelassen.

Entlang dem Außenrand des Kunststoffrahmens 31 erstreckt sich eine umlaufende Deckeldichtung 35. Die Deckeldichtung 35 kann in eine entsprechende Aufnahmenut des Kunststoffrahmens 31 eingesetzt oder an dem Kunststoffrahmen 31 aus einem Werkstoff mit höherer Elastizität angeformt sein.

Insbesondere wenn der Deckel 9 im eingebauten Zustand über die feste Fahrzeugdachfläche ausgestellt werden kann, bildet der Kunststoffrahmen 31, wie aus Fig. 2 hervorgeht, zweckmäßig zugleich nach unten vorspringende seitliche Blenden 36, von denen in Fig. 2 nur eine zu erkennen ist. Die Höhe der Blenden 36 nimmt dabei von vorne nach hinten entsprechend der Neigung des Deckels 9 im ausgestellten Zustand zu.

Um beim Umschäumen ein Vordringen der Schäummasse nach innen bis über die Außenwand 24 der Sicke 23 hinaus zu verhindern, wird gemäß den Figuren 3 bis 5 in die Sicke 23 eine umlaufende Hauptdichtung 37 eingelegt. Diese in Fig. 3 abgebrochen dargestellte Dichtung wird während des Schäumvorganges von dem Schäumwerkzeug 30 gegen die in den Figuren oben liegende Seite der Sikke 23 sowie im Bereich der Spalte 17, 18 gegen den Deckelkörper 10 angepresst. Dabei ist der Spaltbereich hinsichtlich einer einwandfreien Abdichtung besonders kritisch. Um die Dichtwirkung der umlaufenden Hauptdichtung 37 im Bereich der Spalte 17, 18 zu unterstützen, wird dort zusätzlich eine Hilfsdichtung 38 angeordnet. Wie aus Fig. 3 hervorgeht, wird die Hilfsdichtung 38 an der Innenseite der Hauptdichtung 37 angeordnet, und sie ist breiter als der Spalt 17 bzw. 18 bemessen, so dass sie sich in Umfangsrichtung um ein kurze Strecke beidseitig über den Spalt hinaus erstreckt.

### Bezugszeichenliste

- 9: Deckel
- 10: Deckelkörper
- 11: vorderes Verstärkungsteil
- 12: hinteres Verstärkungsteil
- 13: seitliches Verstärkungsteil
- 14: Metalleinleger
- 15, 16: Deckelhalterung
- 17, 18: Spalt
- 19, 20, 21: Sicke
- 22: Sickengrund
- 23: Metalleinlegersicke
- 24: Außenwand von 23
- 25: Innenwand von 23
- 30: Schäumwerkzeug
- 31: Kunststoffrahmen
- 32, 33 34: innenliegender Bereich
- 35: Deckeldichtung
- 36: Blende
- 37: Hauptdichtung
- 38: Hilfsdichtung

## Patentansprüche

1. Deckel für ein Fahrzeugdach mit einem Deckelkörper (10), der im Bereich seines Außenrandes unter Bildung eines Kunststoffrahmens (31) mit Metalleinleger (14) umspritzt, insbesondere umschäumt, ist,
wobei der Metalleinleger (14) sich rahmenförmig entlang im wesentlichen dem gesamten Umfang des Deckels (9) erstreckt, aber in Deckelumfangsrichtung mehrteilig ausgebildet ist, und von dem Kunststoffrahmen (31) nur teilweise umgriffen ist,
**dadurch gekennzeichnet,**
**dass** die den Metalleinleger (14) bildenden Einlegerteile (11, 12, 13) durch Spalte (17, 18) voneinander getrennt sind,
**dass** jedes Einlegerteil (11, 12, 13) des Metalleinlegers (14) eine Sicke (19, 20, 21) aufweist, und
**dass** die Sicken (19, 20, 21) zweier an einem Spalt (17, 18) angrenzender Einlegerteile (11, 12, 13) miteinander fluchten.

2. Deckel für ein Fahrzeugdach mit einem Deckelkörper (10), der im Bereich seines Außenrandes unter Bildung eines Kunststoffrahmens (31) mit Metalleinleger (14) umspritzt, insbesondere umschäumt, ist,
wobei der Metalleinleger (14) sich rahmenförmig entlang im wesentlichen dem gesamten Umfang des Deckels (9) erstreckt, aber in Deckelumfangsrichtung mehrteilig ausgebildet ist, und von dem Kunststoffrahmen (31) nur teilweise umgriffen ist,
**dadurch gekennzeichnet,**
**dass** der Metalleinleger (14) in Deckelumfangsrichtung viergeteilt ist und jedes den Metalleinleger (14) bildende Einlegerteil (11, 12, 13) sich im wesentlichen entlang einer der vier Deckelseiten erstreckt und von den angrenzenden Einlegerteilen durch Spalte (17, 18) voneinander getrennt sind.

3. Deckel nach Anspruch 2,
**dadurch gekennzeichnet, dass** jedes Einlegerteil (11, 12, 13) des Metalleinlegers (14) eine Sicke (19, 20, 21) aufweist und dass die Sicken (19, 20, 21) zweier an einem Spalt (17, 18) angrenzender Einlegerteile (11, 12, 13) miteinander fluchten.

4. Deckel nach einem der vorhergehenden Ansprüche,
**dadurch gekennzeichnet, dass** der Kunststoffrahmen (31) einen auf den Deckelkörper (10) bezogenen Außenrandbereich des Metalleinlegers (14) überdeckt, innenliegende Bereiche (32, 33, 34) des Metalleinlegers (14) jedoch freilässt.

5. Deckel nach einem der vorhergehenden Ansprüche,
**dadurch gekennzeichnet, dass** der Metalleinleger (14) eine umlaufende Sicke (23) aufweist, die mit ihrem Grund (22) an der Unterseite des Dekkelkörpers (10) anliegt.

6. Deckel nach Anspruch 5,
**dadurch gekennzeichnet, dass** der Kunststoffrahmen (31) nach innen bis zu einer Außenwand (24) der umlaufenden Sicke (23) reicht.

7. Deckel nach Anspruch 1,
**dadurch gekennzeichnet, dass** der Metalleinleger (14) in Deckelumfangsrichtung viergeteilt ist, wobei jedes Einlegerteil (11, 12, 13) sich im wesentlichen entlang einer der vier Deckelseiten erstreckt.

8. Deckel nach einem der vorhergehenden Ansprüche,
**dadurch gekennzeichnet, dass** an mindestens einem Teil der Einlegerteile (11, 12, 13) Deckelhalterungen (15, 16) vorgesehen sind.

9. Deckel nach Anspruch 8,
**dadurch gekennzeichnet, dass** sich die Deckelhalterungen (15, 16) nach unten durch den Kunststoffrahmen (31) hindurcherstrecken.

10. Deckel nach einem der vorhergehenden Ansprüche,
**dadurch gekennzeichnet, dass** der Deckelkörper (10) aus Glas oder durchsichtigem Kunststoff gefertigt ist.

11. Deckel nach einem der vorhergehenden Ansprüche,
**dadurch gekennzeichnet, dass** der Kunststoffrahmen (31) aus PUR-Schaum besteht.

12. Deckel nach einem der vorhergehenden Ansprüche,
**dadurch gekennzeichnet, dass** der Kunststoffrahmen (31) zusätzlich seitliche Blenden (36) bildet.

13. Verfahren zum Herstellen des Deckels nach einem der Ansprüche 1 bis 12,
**dadurch gekennzeichnet, dass** zum Umschäumen der Deckelkörper (10) zusammen mit dem mehrteiligen Metalleinleger (14) in ein Schäumwerkzeug (30) eingelegt und dann Schäummasse eingebracht wird, wobei zum Begrenzen des Vordringens der Schäummasse nach innen eine Dichtung (37) in die umlaufende Sicke (23) des Metalleinlegers (14) eingelegt wird.

14. Verfahren nach Anspruch 13,
**dadurch gekennzeichnet, dass** die Dichtung (37) im Bereich der Trennstellen zwischen den Einlegerteilen (11, 12, 13) mittels einer Hilfsdichtung (38) verstärkt wird.

## Claims

1. Cover for a vehicle roof, having a cover body (10) which, in the region of its outer edge, is peripherally encapsulated, in particular peripherally foamed, forming a plastic frame (31) with a metal insert (14), the metal insert (14) extending like a frame along substantially the entire periphery of the cover (9) but being formed in many parts in the peripheral direction of the cover and being only partially embedded in the plastic frame (31),
**characterized**
**in that** the insert parts (11, 12, 13) forming the metal insert (14) are separated from one another by gaps (17, 18),
**in that** each insert part (11, 12, 13) of the metal insert (14) has a bead (19, 20, 21), and
**in that** the beads (19, 20, 21) of two insert parts (11, 12, 13) adjacent to a gap (17, 18) are aligned with one another.

2. Cover for a vehicle roof, having a cover body (10) which, in the region of its outer edge, is peripherally encapsulated, in particular peripherally foamed, forming a plastic frame (31) with a metal insert (14), the metal insert (14) extending like a frame along substantially the entire periphery of the cover (9) but being formed in many parts in the peripheral direction of the cover and being only partially embedded in the plastic frame (31),
**characterized**
**in that** the metal insert (14) is divided into four in the peripheral direction of the cover, and each insert part (11, 12, 13) forming the metal insert (14) extends substantially along one of the four sides of the cover and is separated from the adjacent insert parts by gaps (17, 18).

3. Cover according to Claim 2, **characterized in that** each insert part (11, 12, 13) of the metal insert (14) has a bead (19, 20, 21), and **in that** the beads (19, 20, 21) of two insert parts (11, 12, 13) adjacent to a gap (17, 18) are aligned with one another.

4. Cover according to one of the preceding claims, **characterized in that** the plastic frame (31) covers an outer edge region of the metal insert (14), as based on the cover body (10), but leaves inner regions (32, 33, 34) of the metal insert (14) free.

5. Cover according to one of the preceding claims, **characterized in that** the metal insert (14) has a peripheral bead (23) which rests with its base (22) on the underside of the cover body (10).

6. Cover according to Claim 5, **characterized in that** the plastic frame (31) extends inwards as far as an outer wall (24) of the peripheral bead (23).

7. Cover according to Claim 1, **characterized in that** the metal insert (14) is divided into four in the peripheral direction of the cover, each insert part (11, 12, 13) extending substantially along one of the four sides of the cover.

8. Cover according to one of the preceding claims, **characterized in that** cover mountings (15, 16) are provided on at least some of the insert parts (11, 12, 13).

9. Cover according to Claim 8, **characterized in that** the cover mountings (15, 16) extend downwards through the plastic frame (31).

10. Cover according to one of the preceding claims, **characterized in that** the cover body (10) is produced from glass or transparent plastic.

11. Cover according to one of the preceding claims, **characterized in that** the plastic frame (31) consists of PUR foam.

12. Cover according to one of the preceding claims, **characterized in that** the plastic frame (31) additionally forms side screens (36).

13. Method for producing the cover according to one of Claims 1 to 12, **characterized in that**, in order to foam it peripherally, the cover body (10) together with the multi-part metal insert (14) is inserted into a foaming mould (30) and a foaming compound is then introduced, a seal (37) being inserted into the peripheral bead (23) of the metal insert (14) in order to limit the inward penetration of the foaming compound.

14. Method according to Claim 13, **characterized in that** the seal (37) is reinforced by means of an auxiliary seal (38) in the region of the points of separation between the insert parts (11, 12, 13).

## Revendications

1. Panneau pour un toit de véhicule, avec un corps de panneau (10) qui, dans la région de son bord extérieur, est enrobé par injection, notamment par moussage, en formant un cadre (31) en matière plastique doté d'un insert métallique (14),
sachant que l'insert métallique (14) s'étend en forme de cadre sensiblement sur toute la périphérie du panneau (9), mais est réalisé en plusieurs parties dans la direction périphérique du panneau, et n'est que partiellement entouré par le cadre (31) en matière plastique,
**caractérisé en ce que** les parties d'insert (11, 12, 13) formant l'insert métallique (14) sont séparées les unes des autres par des interstices (17, 18),
**en ce que** chaque partie d'insert (11, 12, 13) de l'insert métallique (14) présente une moulure (19, 20, 21),
et **en ce que** les moulures (19, 20, 21) de deux parties d'insert (11, 12, 13) limitrophes à un interstice (17, 18) sont mutuellement alignées.

2. Panneau pour un toit de véhicule, avec un corps de panneau (10) qui, dans la région de son bord extérieur, est enrobé par injection, notamment par moussage, en formant un cadre (31) en matière plastique doté d'un insert métallique (14),
sachant que l'insert métallique (14) s'étend en forme de cadre sensiblement sur toute la périphérie du panneau (9), mais est réalisé en plusieurs parties dans la direction périphérique du panneau, et n'est que partiellement entouré par le cadre (31) en matière plastique,
**caractérisé en ce que** l'insert métallique (14) est divisé en quatre parties dans la direction périphérique du panneau, et chaque partie d'insert (11, 12, 13) formant l'insert métallique (14) s'étend sensiblement le long d'un des quatre côtés du panneau et est séparée des parties d'insert limitrophes par des interstices (17, 18).

3. Panneau selon la revendication 2, **caractérisé en ce que** chaque partie d'insert (11, 12, 13) de l'insert métallique (14) présente une moulure (19, 20, 21), et **en ce que** les moulures (19, 20, 21) de deux parties d'insert (11, 12, 13) limitrophes à un interstice (17, 18) sont mutuellement alignées.

4. Panneau selon l'une des revendications précédentes, **caractérisé en ce que** le cadre (31) en matière plastique recouvre une région de bord extérieur - par rapport au corps de panneau (10) - de l'insert métallique (14), mais laisse dégagées des régions intérieures (32, 33, 34) de l'insert métallique (14).

5. Panneau selon l'une des revendications précédentes, **caractérisé en ce que** l'insert métallique (14) présente une moulure (23) qui en fait le tour et qui s'applique par son fond (22) contre le dessous du corps de panneau (10).

6. Panneau selon la revendication 5, **caractérisé en ce que** le cadre (31) en matière plastique s'étend vers l'intérieur jusqu'à une paroi extérieure (24) de la moulure entourante (23).

7. Panneau selon la revendication 1, **caractérisé en ce que** l'insert métallique (14) est divisé en quatre parties dans la direction périphérique du panneau, chaque partie d'insert (11, 12, 13) s'étendant sensiblement le long d'un des quatre côtés du panneau.

8. Panneau selon l'une des revendications précédentes, **caractérisé en ce que** des attaches de panneau (15, 16) sont prévues sur au moins certaines des parties d'insert (11, 12, 13).

9. Panneau selon la revendication 8, **caractérisé en ce que** les attaches de panneau (15, 16) s'étendent vers le bas à travers le cadre (31) en matière plastique.

10. Panneau selon l'une des revendications précédentes, **caractérisé en ce que** le corps de panneau (10) est réalisé en verre ou en matière plastique transparente.

11. Panneau selon l'une des revendications précédentes, **caractérisé en ce que** le cadre (31) en matière plastique est constitué de mousse de polyuréthane.

12. Panneau selon l'une des revendications précédentes, **caractérisé en ce que** le cadre (31) en matière plastique forme en outre des bandeaux latéraux (36).

13. Procédé de fabrication du panneau selon l'une des revendications 1 à 12, **caractérisé en ce que**, en vue de l'enrobage par moussage, le corps de panneau (10) est placé conjointement avec l'insert métallique (14) en plusieurs parties dans un moule de moussage (30) puis on introduit la masse de mousse, une garniture d'étanchéité (37) étant insérée dans la rainure entourante (23) de l'insert métallique (14) afin de limiter la pénétration de la masse de mousse vers l'intérieur.

14. Panneau selon la revendication 13, **caractérisé en ce que** la garniture d'étanchéité (37) est renforcée au moyen d'une garniture d'étanchéité auxiliaire (38) dans la région des points de séparation entre les parties d'insert (11, 12, 13).
